# EUROPEAN PATENT APPLICATION

(11) **EP 3 683 780 A1**
(43) Date of publication of application: **22.07.2020**
(21) Application number: 20151321.5
(22) Date of filing: 10.01.2020
(51) Int. Cl.: G08G 1/04, G08G 1/16, G08G 3/02, G08G 5/04, G08G 5/06

(54) **OBSTACLE DETECTION USING CAMERA MOUNTED ON PROTRUSION OF VEHICLE**

(30) Priority: 21.01.2019 US 201916252945
(71) Applicant: Honeywell International Inc., Morris Plains, NJ 07950 (US)
(72) Inventor: PANCHANGAM, Sunitha, Morris Plains, New Jersey 07950 (US); KRISHNAMOORTHY, Nathan, Morris Plains, New Jersey 07950 (US); SURENDRAN, Anoop, Morris Plains, New Jersey 07950 (US); SURACE, Lawrence J., Morris Plains, New Jersey 07950 (US)
(74) Representative: Haseltine Lake Kempner LLP

(57) **Abstract**

In some examples, a collision awareness system for a vehicle includes a camera configured to mount on a protrusion of the vehicle and capture an image and a wireless transmitter configured to mount on the protrusion of the vehicle. The collision awareness system includes processing circuitry configured to mount on the protrusion of the vehicle, receive the image from the camera, and determine a distance between a point on the vehicle and an object based on the image. The processing circuitry is also configured to determine whether the distance between the point on the vehicle and the object is less than a threshold level. The processing circuitry is further configured to cause the wireless transmitter to transmit an alert to a receiver mounted on the vehicle in response to determining that the distance between the point on the vehicle and the object is less than the threshold level.

## Description

### TECHNICAL FIELD

This disclosure relates to obstacle detection for vehicles.

### BACKGROUND

A vehicle can include sensors for detecting obstacles in the proximity of the vehicle. The sensors can use radar, ultrasound, infrared, radio-frequency waves, and/or any other types of sensing means. The vehicle can also include a camera that streams video to a display for the vehicle operator. The operator and/or crewmembers of the vehicle can view the video stream and identify an obstacle in the video presented on the display.

### SUMMARY

In general, this disclosure relates to systems, devices, and techniques for capturing and processing images at a protrusion of a vehicle. A collision awareness system may include a camera, a wireless transmitter, and processing circuitry mounted on the protrusion. The processing circuitry can use an image captured by the camera to determine whether a distance between an object and a point on the vehicle is less than a threshold level. The processing circuitry can cause the wireless transmitter to transmit an alert to a receiver in response to determining that the distance between the point on the vehicle and the object is less than the threshold level.

In some examples, a collision awareness system for a vehicle includes a camera configured to mount on a protrusion of the vehicle and capture an image and a wireless transmitter configured to mount on the protrusion of the vehicle. The collision awareness system includes processing circuitry configured to mount on the protrusion of the vehicle, receive the image from the camera, and determine a distance between a point on the vehicle and an object based on the image. The processing circuitry is also configured to determine whether the distance between the point on the vehicle and the object is less than a threshold level. The processing circuitry is further configured to cause the wireless transmitter to transmit an alert to a receiver mounted on the vehicle in response to determining that the distance between the point on the vehicle and the object is less than the threshold level.

In some examples, a collision awareness method includes receiving, by processing circuitry mounted on a protrusion of a vehicle, an image from a camera mounted on the protrusion. The collision awareness method also includes determining, by processing circuitry, a distance between a point on the vehicle and the object based on the image. The collision awareness method further includes determining, by processing circuitry, that the distance between the point on the vehicle and the object is less than a threshold level. The collision awareness method includes causing, by processing circuitry, a wireless transmitter mounted on the protrusion to transmit an alert to a receiver mounted on the vehicle in response to determining that the distance between the point on the vehicle and the object is less than the threshold level.

In some examples, a device includes a computer-readable medium having executable instructions stored thereon, configured to be executable by processing circuitry for causing the processing circuitry to receive an image from a camera mounted on a protrusion of a vehicle. The instructions are further configured to be executable by the processing circuitry for causing the processing circuitry to determine a distance between a point on the vehicle and the object based on the image and determine that the distance between the point on the vehicle and the object is less than a threshold level. The instructions are also configured to be executable by the processing circuitry for causing the processing circuitry to cause a wireless transmitter mounted on the protrusion to transmit an alert to a receiver mounted on the vehicle in response to determining that the distance between the point on the vehicle and the object is less than the threshold level, wherein the device is configured to mount on the protrusion of the vehicle.

The details of one or more examples of the disclosure are set forth in the accompanying drawings and the description below. Other features, objects, and advantages will be apparent from the description, drawings, and claims.

### BRIEF DESCRIPTION OF THE DRAWINGS

FIG. 1 is a conceptual block diagram of a camera mounted on a protrusion of a vehicle, in accordance with some examples of this disclosure.
FIG. 2 is a conceptual block diagram of a sensor including processing circuitry and a camera coupled to a circuit board, in accordance with some examples of this disclosure.
FIG. 3 is a conceptual block diagram of a vehicle control center including a receiver configured to receive an alert, in accordance with some examples of this disclosure.
FIG. 4 is a diagram of a vehicle including four sensors, where each sensor is mounted on a protrusion of the vehicle, in accordance with some examples of this disclosure.
FIGS. 5 and 6 are conceptual block diagrams of a vehicle detecting an object based on an image captured by a camera onboard the vehicle, in accordance with some examples of this disclosure.
FIG. 7 is a flowchart illustrating an example process for detecting an object in the proximity of a vehicle, in accordance with some examples of this disclosure.
FIG. 8 is a flowchart illustrating an example process for determining an estimated time to collision between a vehicle and an object, in accordance with some examples of this disclosure.

### DETAILED DESCRIPTION

Various examples are described below for image processing and obstacle detection at a protrusion of a vehicle. Processing circuitry mounted on the protrusion can determine whether an object is within a threshold distance of a point on the vehicle. Responsive to determining that the object is within the threshold distance, the processing circuitry can cause a wireless transmitter mounted on the protrusion to transmit an alert to a receiver mounted on the vehicle. A sensor of this disclosure can process images at the protrusion and transmit alerts to the receiver if the sensor determines that the object poses the threat of a collision.

The techniques of this disclosure can be used on land vehicles, marine vehicles, and aircraft. In the context of an aircraft, a sensor can be mounted on a protrusion such as the nose of the aircraft, the tail of the aircraft, or the wingtip of the aircraft. A wingtip-mounted sensor can alert the vehicle operator to a potential wingtip collision, which is a recurring issue at airports. A collision awareness system of this disclosure can warn or alert a vehicle operator to avoid a potential wingtip collision. The collision awareness system may be especially useful in areas that are not well-monitored or well-lit, such as in fixed-based-operator areas and other ramp areas.

A collision awareness system of this disclosure may be able to process images, detect obstacles, and generate alerts at the protrusion of the vehicle. Thus, the burden on the central processing system of the vehicle is reduced, as compared to another system with a camera mounted on the protrusion that sends images to a central processor. The central processor of the other system may have to process the images received from the protrusion-mounted sensor to detect obstacles and generate alerts. By reducing the burden on the central processing system, a system of this disclosure can conserve the resources of the central processing system for other tasks.

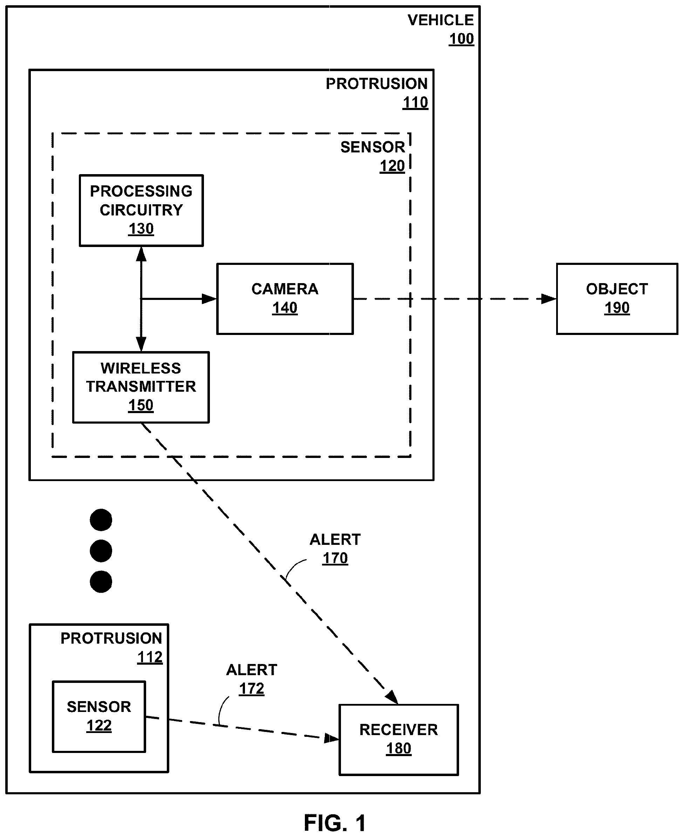

FIG. 1 is a conceptual block diagram of a camera 140 mounted on a protrusion 110 of a vehicle 100, in accordance with some examples of this disclosure. Sensors 120 and 122 may be part of a collision awareness system for detecting a potential collision between vehicle 100 and object 190. In examples in which sensor 120 or 122 detects a potential collision between vehicle 100 and object 190, sensor 120 or 122 can send alert 170 or 172 to receiver 180. The collision awareness system may be configured to present information to the operator of vehicle 100 indicating the potential collision between vehicle 100 and object 190, such as the distance between a point on vehicle 100 and object 190 or an estimated time to collision.

Vehicle 100 may be any mobile object or remote object. In some examples, vehicle 100 may be an aircraft such as an airplane, a helicopter, or a weather balloon, or vehicle 100 may be a space vehicle such as a satellite or spaceship. In yet other examples, vehicle 100 may include a land vehicle such as an automobile or a water vehicle such as a ship or a submarine. Vehicle 100 may be a manned vehicle or an unmanned vehicle, such as a drone, a remote-control vehicle, or any suitable vehicle without any pilot or crew on board.

Protrusions 110 and 112 are portions of vehicle 100. For example, protrusions 110 and 112 may include a corner, nose, tail, wingtip, wheel well, fin, vertical stabilizer, roof, bumper, fender, or any other protruding portion of vehicle 100. Each of protrusions 110 and 112 may include a power source such as an electrical wire and/or a battery to provide power to sensors 120 and 122.

Sensor 120 can include processing circuitry 130, camera 140, and wireless transmitter 150. Sensor 122 may also include processing circuitry, a camera, and a wireless transmitter (not shown in detail in FIG. 1). Sensor 120 is positioned in protrusion 110, and sensor 122 is positioned in protrusion 112. Although vehicle 100 is shown as having two sensors, vehicle 100 can have one, two, three, four, or any other number of sensors. Sensor 120 can be positioned on or inside of protrusion 110. In some examples, sensor 120 is partially exposed to the environment outside vehicle 100, such that camera 140 can capture images of the area surrounding vehicle 100. Sensor 120 can also be entirely inside of vehicle 100, where camera 140 can capture images of the area surrounding vehicle 100 through a translucent surface of vehicle 100.

Sensor 120 can be mounted on protrusion 110 by physically attaching the components of sensor 120 to a portion of vehicle 100 at protrusion 110. Sensor 120 can be attached to vehicle 100 using tape, glue, other adhesives, screws, nails, fasteners, rivets, bolts, solder, welds, and/or any other type of attachment means. Sensor can be attached inside of vehicle 100, outside of vehicle 100, on top of vehicle 100, underneath vehicle 100, and/or anywhere else on protrusion 110 of vehicle 100. In some examples, sensor 120 does not include radar, lidar, infrared detection, or ultrasonic sensors such that sensor 120 detects object 190 using only images captured by camera 140. Using only camera 140 may be more accurate and less expensive, as compared to using multiple means of detection, such as radar and ultrasound.

Sensor 120 may be configured to perform local (at protrusion 110) image processing techniques to determine the possibility of collision between vehicle 100 and object 190. Processing circuitry 130 can execute the image processing routines at protrusion 110 and transmit alert 170 using wireless communication. The wireless transmission can eliminate the need for wires to transmit alert 170 from sensor 120 to receiver 180. Thus, processing circuitry 130 can cause the transmission of alert 170 by wireless transmission only, rather than by wired transmission.

Processing circuitry 130 can perform obstacle detection and provide collision awareness based on images captured by camera 140. Processing circuitry 130 may be configured to determine whether vehicle 100 will potentially collide with object 190. Processing circuitry 130 may be configured to assess the threat level of object 190. Responsive to determining that there may be a collision with object 190, processing circuitry 130 may generate alert 170. Processing circuitry 130 can cause wireless transmitter 150 to send a signal encoding alert 170 to receiver 180.

Processing circuitry 130 may include any suitable arrangement of hardware, software, firmware, or any combination thereof, to perform the techniques attributed to processing circuitry 130 herein. Examples of processing circuitry 130 include any one or more microprocessors, digital signal processors (DSPs), application specific integrated circuits (ASICs), field programmable gate arrays (FPGAs), or any other equivalent integrated or discrete logic circuitry, as well as any combinations of such components. When processing circuitry 130 includes software or firmware, processing circuitry 130 further includes any necessary hardware for storing and executing the software or firmware, such as one or more processors or processing units.

In general, a processing unit may include one or more microprocessors, DSPs, ASICs, FPGAs, or any other equivalent integrated or discrete logic circuitry, as well as any combinations of such components. Although not shown in FIG. 1, processing circuitry 130 may include a memory configured to store data. The memory may include any volatile or non-volatile media, such as a random access memory (RAM), read only memory (ROM), non-volatile RAM (NVRAM), electrically erasable programmable ROM (EEPROM), flash memory, and the like. In some examples, the memory may be external to processing circuitry 130 (e.g., may be external to a package in which processing circuitry 130 is housed).

Processing circuitry 130 may be configured to determine a distance between a point on vehicle 100 and object 190 based on the image. Processing circuitry 130 may first determine the position of object 190 relative to camera 140. Processing circuitry 130 can use image processing techniques to determine the position of object 190 relative to camera 140. Processing circuitry 130 may be configured to process images captured by camera 140 at a rate of twenty or thirty frames per second. Processing circuitry 130 can determine the distance based on a single-camera detection technique. For example, processing circuitry 130 can determine an azimuth angle, an elevation angle, and a range of object 190 based on the image. Processing circuitry 130 may be configured to determine the azimuth angle and the elevation angle based on the orientation of camera 140 (e.g., the direction that camera 140 is pointing).

Processing circuitry 130 can determine the distance or range between camera 140 and object 190 using image processing techniques. For example, processing circuitry 130 can determine the range of a line or other symbol on a road, runway, taxiway, or another surface based on a known length or size of the symbol. In examples in which object 190 is positioned near a symbol on a surface, processing circuitry 130 can determine a distance to object 190 based on the determined distance to the symbol. Processing circuitry 130 can use other landmarks or known distances in the image to determine the distance between camera 140 and object 190.

Based on the position of object 190 relative to camera 140, processing circuitry 130 can determine the position of object 190 relative to a point on vehicle 100. The point on vehicle 100 may be on protrusion 110 or 112, or the point may be at another location on vehicle 100. The point may also be an imaginary point or line such as a centerline of vehicle 100 or a plane aligned with an edge of vehicle 100. Processing circuitry 130 may be configured to determine the position of object 190 relative to the point on the vehicle 100 based on the position of object 190 relative to camera 140 and further based on the position of camera 140 relative to the point on the vehicle.

Processing circuitry 130 may be configured to determine that the distance between the point on vehicle 100 and object 190 is less than a threshold level. The threshold level can represent or be equal to a width, length, height, clearance, radius, or wingspan of vehicle 100. In some examples, the threshold level may represent a time or distance to collision between vehicle 100 and object 190. Processing circuitry 130 may be configured to compare the distance between the point on vehicle 100 and object 190 to more than threshold level, where each threshold level represents a different likelihood of collision or a different threat level.

Processing circuitry 130 may be configured to cause wireless transmitter 150 to transmit alert 170 to receiver 180 in response to determining that the distance between the point on vehicle 100 and object 190 is less than the threshold level. Processing circuitry 130 can encode alert 170 into a signal for transmission by wireless transmitter 150. Processing circuitry 130 can also encode other information into the signal such as a threat level of object 190, a distance between object 190 and a point on vehicle 100, a distance between object 190 and camera 140, an estimated time to collision between vehicle 100 and object 190, an estimated distance to collision between vehicle 100 and object 190, and/or any other information.

In some examples, processing circuitry 130 is configured to suppress the transmission of alert 170 responsive to determining that object 190 is not within a threshold distance of the point on vehicle 100. By suppressing the transmission of alert 170, processing circuitry 130 can reduce the amount of data transmitted to receiver 180.

Camera 140 is configured to capture an image of object 190. Camera 140 may be capable of capturing visible-light images and/or infrared images. Camera 140 can be coupled to processing circuitry 130 such that processing circuitry 130 receives the images captured by camera 140. For example, processing circuitry 130 and camera 140 may be coupled to a printed circuit board (PCB) to allow communication between processing circuitry 130 and camera 140. Camera 140 can have a stationary field of view (e.g., stationary with respect to vehicle 100) or a rotating field of view.

Wireless transmitter 150 may be configured to transmit a signal encoding alert 170 to receiver 180. Wireless transmitter 150 may be coupled to processing circuitry 130 such that processing circuitry 130 can control the transmission of signals by wireless transmitter 150. In some examples, sensor 120 may also include a wireless receiver to receive signals. Wireless transmitter 150 may be capable of transmitting signals using Wi-fi, Bluetooth, radio communication, infrared, Wireless Avionics Intra-Communications (WAIC), and/or any other electromagnetic protocol.

Alerts 170 and 172 can include information relating to a potential collision. In the simplest form, alerts 170 and 172 can be a single bit of information (e.g., a potential collision or no potential collision). Processing circuitry 130 may generate alert 170 and cause wireless transmitter 150 to transmit a signal encoding alert 170 responsive to processing circuitry 130 determining that object 190 is less than a threshold distance from a point on vehicle 100. The processing circuitry of sensor 122 may generate alert 172 and cause the wireless transmitter of sensor 122 to transmit a signal encoding alert 172 responsive to the processing circuitry determining that object 190 is less than a threshold distance from a point on vehicle 100. The signal encoding alert 170 can also include information such as the distance between object 190 and the point on vehicle 100, the distance between object 190 and camera 140, an estimated time to collision between vehicle 100 and object 190, any other information relating to object 190, and/or any other information relating an image captured by camera 140.

Receiver 180 can be mounted on vehicle 100. In some examples, receiver 180 is located in a control center of vehicle 100. Receiver 180 can be a part of the avionics bay of an aircraft or a part of the digital instrument panel of an automobile. Receiver 180 can also be outside of vehicle 100 in examples in which vehicle 100 is a remote-controlled vehicle. Receiver 180 may be capable of receiving signals using Wi-fi, Bluetooth, radio communication, infrared, Wireless Avionics Intra-Communications (WAIC), and/or any other electromagnetic protocol.

Object 190 can be a physical structure that can collide with vehicle 100. For example, object 190 may be a ground obstacle, such as another vehicle, a building, a sign, a light pole, a terrain feature (e.g., hill, slope, etc.), a plant such as a tree, a person, and/or any other ground object. Object 190 can also be an airborne obstacle, such as a bird or bat, an unmanned aerial vehicle, another flying vehicle, and/or any other airborne object. Object 190 may also be a water-based obstacle, such as a boat, a rock, a floating object, and/or any other water-based object.

In accordance with the techniques of this disclosure, processing circuitry 130 can detect the presence of object 190 based on an image captured by camera 140. Processing circuitry 130 may be configured to determine whether a distance between a point on vehicle 100 and object 190 is less than a threshold level. Responsive to determining that the distance is less than the threshold level, processing circuitry 130 can send alert 170, via wireless transmitter 150, to receiver 180.

Sensor 120 can detect obstacles at protrusion 110, rather than transmitting a video stream to receiver 180 for image processing at a central processor. In examples in which all of the sensors on vehicle 100 (e.g., sensors 120 and 122) transmit video streams to receiver 180, the central processor may consume significant resources in detecting obstacles in the video streams. In contrast, sensor 120 transmits alert 170, rather than a video stream, which can reduce the burden on the central processor and on the operator of vehicle 100. Thus, the operator of vehicle 100 may not have to view images captured by camera 140 and make a judgment about the threat of collision because processing circuitry 130 determines whether the distance is less than the threshold level.

In another collision awareness system, the central processor may fuse data streams from two or more sensors. Multi-sensor fusion can be resource-intensive because the central processor combines data from multiple sensors. Moreover, presenting one or more video streams to an operator of vehicle 100 can leave the operator to determine whether object 190 is a potential collision threat. Processing circuitry 130 may be configured to determine the distance between the point on vehicle 100 and object 190 based on a single-camera detection technique. The single-camera detection technique of this disclosure may be less resource-intensive than a multi-sensor fusion approach.

Using image processing, sensor 120 may be able to determine the location of object 190 with a high degree of accuracy. Another collision awareness system that uses Global Positioning System (GPS) data may have an error of approximately twenty feet or more. Another collision awareness system may also use radar on a protrusion of a vehicle, with or without a camera. Adding radar or ultrasonic sensors to the protrusion can result in additional weight and cost to the system. Thus, a collision awareness system of this disclosure may be more accurate and less expensive than a system that relies on GPS and/or radar.

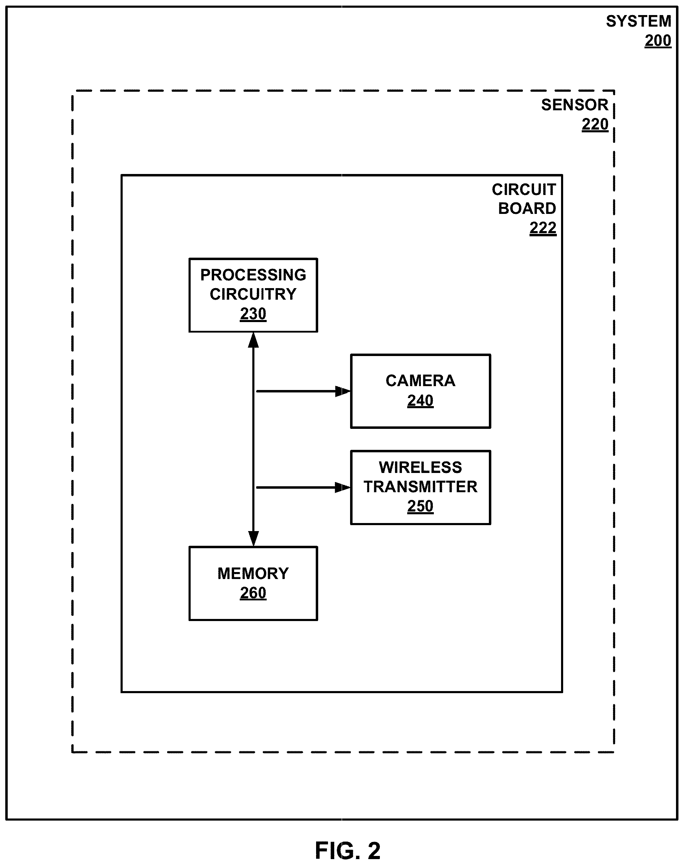

FIG. 2 is a conceptual block diagram of a sensor 220 including processing circuitry 230 and a camera 240 coupled to a circuit board 222, in accordance with some examples of this disclosure. Sensor 220 includes circuit board 222, processing circuitry 230, camera 240, wireless transmitter 250, and memory 260. Each of the components of sensor 220 may be coupled to circuit board 222 through mounting, soldering, through-hole connections, wires, leads, pins, and/or any other coupling means. For example, each of processing circuitry 230, wireless transmitter, and memory 260 may include a semiconductor package configured to mount on circuit board 222. Camera 240 may be coupled to circuit board 222 by wires.

The components of sensor 220 may be coupled to single circuit board 222. In some examples, sensor 220 may include additional circuit boards. Circuit board 222 may be positioned at a protrusion of vehicle 200. Circuit board 222 may include a printed circuit board (PCB), a wiring board, a breadboard, and/or any other board for electronic components.

Memory 260 may be configured to store images, distances between an object and camera 240, distances between an object and a point on a vehicle, threshold levels, speeds of the vehicle, estimated times to collision, and/or any other data. In some examples, memory 260 may store program instructions, which may include one or more program modules, which are executable by processing circuitry 230. When executed by processing circuitry 230, such program instructions may cause processing circuitry 230 to provide the functionality ascribed to it herein. The program instructions may be embodied in software, firmware, and/or RAMware. Memory 260 may include any volatile, non-volatile, magnetic, optical, or electrical media, such as a random access memory (RAM), read-only memory (ROM), non-volatile RAM (NVRAM), electrically-erasable programmable ROM (EEPROM), flash memory, or any other digital media.

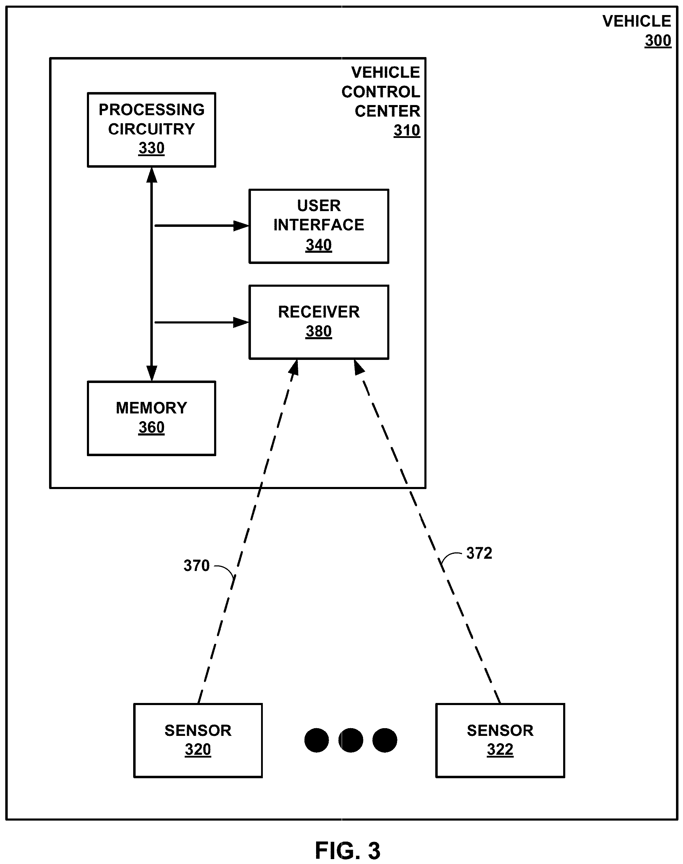

FIG. 3 is a conceptual block diagram of a vehicle control center 310 including a receiver 380 configured to receive an alert 370 or 372, in accordance with some examples of this disclosure. Sensors 320 and 322 are examples of sensors 120, 122, or 220 that are configured to capture images, determine distances based on the images, and output alerts 370 and 372.

Vehicle control center 310 can include the cockpit of an aircraft, the avionics bay of an aircraft, the bridge of a marine vehicle, the digital instrument panel of vehicle 300, the engine control unit of vehicle 300, and/or any other operator controls for vehicle 300.
In some examples, processing circuitry 330, user interface 340, memory 360, and/or receiver 380 may be positioned outside of vehicle control center 310.

Processing circuitry 330 may be configured to decode signals received by receiver 380. Processing circuitry 330 can also receive user inputs via user interface 340. Processing circuitry 330 can cause user interface 340 to present information indicating alerts 370 and 372 to a user. For example, processing circuitry 330 can present a visual indication of the distance between an object and a point on vehicle 300. Processing circuitry 330 can also present a visual indication of an estimated time to collision between the object and vehicle 300. In some examples, processing circuitry 330 generates a graphical user interface that includes a graphical representation of vehicle 300 and a graphical representation of the object. The positions of the graphical representations on the graphical user interface can indicate the location of the object relative to vehicle 300.

User interface 340 may be configured to present information to a user (e.g., a vehicle operator and/or crewmembers). User interface 340 may include a display configured to present a graphical user interface to a user, which may include information about obstacles. User interface 340 may include a monitor, an electronic flight bag, a primary flight display, a multifunction display, a heads-up display, a heads-down display, cathode ray tube display, a flat panel display such as a liquid crystal (LCD) display, a plasma display, a light emitting diode (LED) display, and/or any other suitable display. User interface 340 may be part of a personal digital assistant, mobile phone, tablet computer, laptop computer, any other suitable computing device, or any combination thereof, with a built-in display or a separate display. User interface 340 may also include means for projecting audio to a user, such as speaker(s). Processing circuitry 330 may be configured to present, via user interface 340, a visual, audible, tactile, or somatosensory notification (e.g., an alarm signal) indicative of an obstacle and/or a potential collision.

User interface 340 may include or be part of any suitable device for conveying such information, including a computer workstation, a server, a desktop, a notebook, a laptop, a handheld computer, a mobile device, or the like. In some examples, processing circuitry 330 and user interface 340 may be part of the same device or supported within one housing (e.g., a computer or monitor). In other examples, processing circuitry 330 and user interface 340 may be separate devices configured to communicate through a wired connection or a wireless connection. Based on alert 370 or alert 372, user interface 340 may be configured to present information indicating a potential collision between vehicle 300 and an object, such as the estimated time or distance to collision.

Memory 360 may be configured to store alerts 370 and 372. Memory 360 can also store any other information received by receiver 380 from sensors 320 and 322. Memory 360 can store the GPS location of vehicle 300 and information about the location, speeds, and headings of other vehicles. Vehicle 300 may receive surveillance signals of other vehicle, for example via an automatic-dependent surveillance-broadcast (ADS-B) receiver.

Receiver 380 is an example of receiver 180 shown in FIG. 1. Receiver 380 may be configured to receive a wireless signal encoding alert 370 from sensor 320. Receiver 380 may be configured to receive a wireless signal encoding alert 372 from sensor 322.

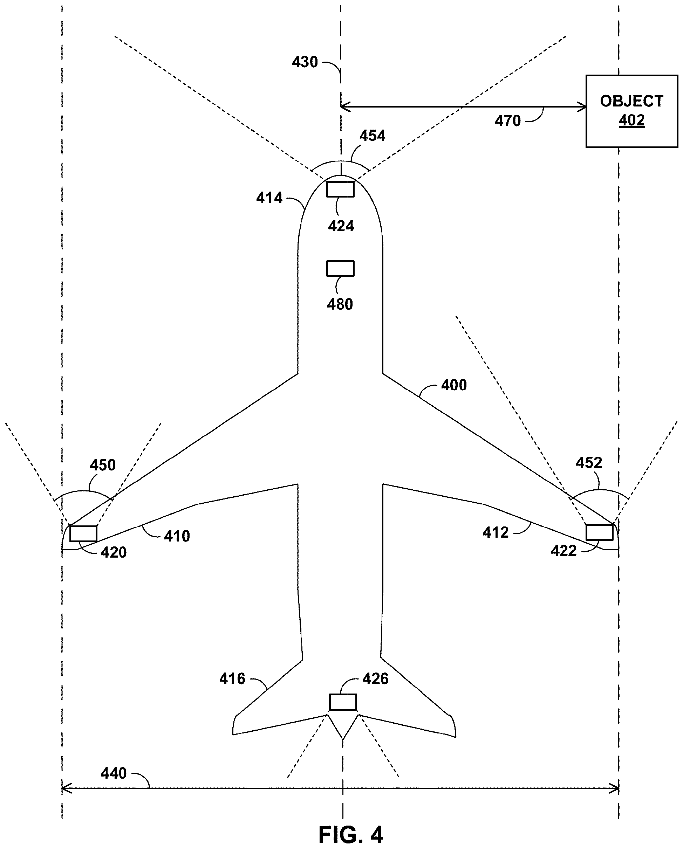

FIG. 4 is a diagram of a vehicle 400 including four sensors 420, 422, 424, and 426, where each sensor is mounted on a protrusion 410, 412, 414, and 416 of the vehicle 400, in accordance with some examples of this disclosure. Vehicle 400 includes wing protrusions 410 and 412, nose protrusion 414, and tail protrusion 416. Vehicle 400 also includes receiver 480 positioned in a vehicle control center (e.g., a cockpit of vehicle 400).

Each of sensors 420, 422, 424, and 426 can include processing circuitry, a camera, and a wireless transmitter. The field of view of sensor 420 is shown by angle 450, and the field of view of sensor 422 is shown by angle 452. Angles 450 and 452 for the sensors mounted on wing protrusions 410 and 412 may be fifty degrees. In some examples, angles 450 and 452 may be less than ninety degrees or less than seventy degrees. The field of view of sensor 424 mounted on nose protrusion 414 is shown by angle 454, which may be one and twenty degrees. In some examples, angle 454 may be greater than ninety degrees or greater than one hundred degrees to provide a greater field of view for sensor 424 mounted on nose protrusion 414. Nose sensor 424 can detect objects in front of vehicle 400, wingtip sensors 420 and 422 can detect objects to the sides of vehicle 400, and tail sensor 426 can detect objects behind vehicle 400. Nose sensor 424 may include an enhanced flight vision system (EVS) camera. The EVS camera may be an infrared camera, in some example.

Sensor 422 may be able to detect object 402 by capturing an image and processing the image at sensor 422. Object 402 may be outside of the fields of view of sensors 420, 424, and 426. Sensor 422 may be configured to determine distance 470 between object 402 and centerline 430. Centerline 430 is an example of a point on vehicle 400. Centerline 430 may be a two-dimensional plane that bisects vehicle 400.

Sensor 422 can compare distance 470 to a threshold level, which may be equal to or based on wingspan 440 (e.g., the width of vehicle 400). For example, the threshold level may be greater than or equal to one half of wingspan 440 of vehicle 400. Responsive to determining that distance 470 is less than the threshold level, sensor 422 may be configured to transmit an alert to receiver 480. In some examples, sensor 422 is configured to transmit the alert to receiver 480 only in response to determining that distance 470 is less than the threshold level. Thus, sensor 422 may be configured to suppress the transmission of an alert signal in response to determining that distance 470 is greater than the threshold level.

Additional example details of wingtip sensors can be found in commonly assigned U.S. Patent No. 9,575,174, entitled "Systems and Methods for Filtering Wingtip Sensor Information," which issued on February 21, 2017, and commonly assigned U.S. Patent Application Publication No. 2013/0321169, entitled "Airport Surface Collision-Avoidance System (ASCAS)," filed on December 10, 2012, both of which are incorporated by reference in their entirety.

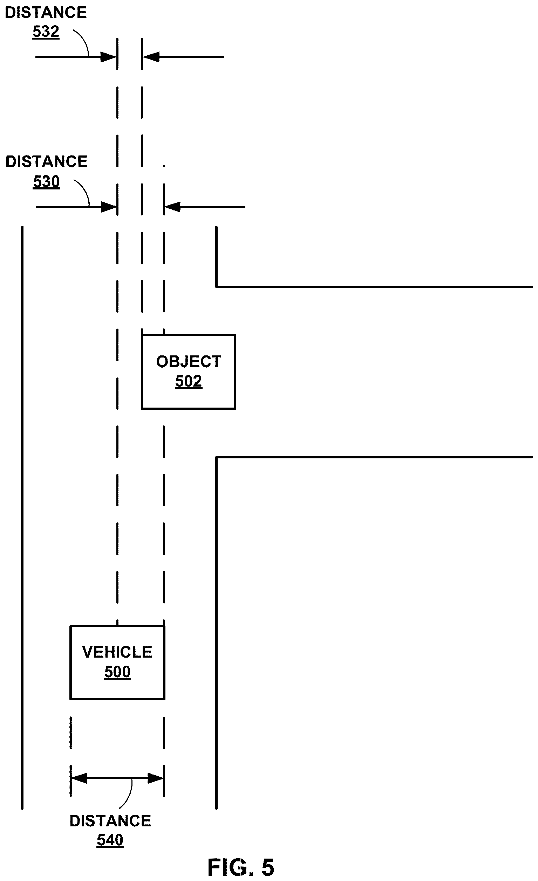

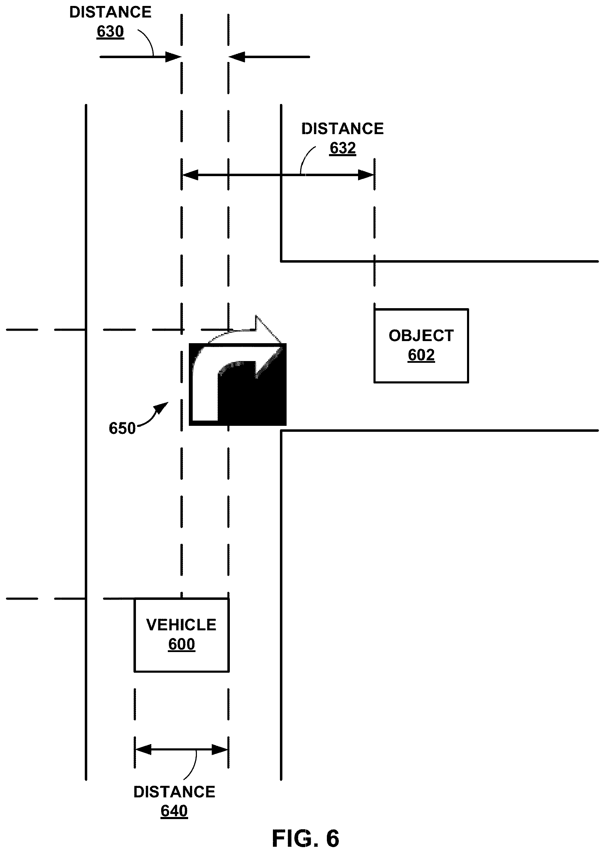

FIGS. 5 and 6 are conceptual block diagrams of a vehicle detecting an object based on an image captured by a camera onboard the vehicle, in accordance with some examples of this disclosure. In the example of FIG. 5, vehicle 500 includes a camera that can capture an image of object 502. Vehicle 500 may include cameras positioned in a nose of vehicle 500 and in one or more wingtips of vehicle 500. The camera positioned in the nose of vehicle 500 may be an EVS camera. The processing circuitry that is collocated with the camera may be configured to determine the location of object 502 relative to the nose of vehicle 500.

In examples in which object 502 is an aircraft, the camera onboard vehicle 500 can capture an image of the tail, elevator, vertical stabilizer, wing, and/or any other miscellaneous features of object 502. The collocated processing circuitry can determine the relative location of any of the features of object 502. The collocated processing circuitry can also determine distance 532 based on the captured images, where distance 532 is the distance between the centerline of vehicle 500 and object 502.

The collocated processing circuitry may be configured to compare distance 532 to distance 530. Distance 530 may be threshold level that represents one half of distance 540, where distance 540 is the wingspan or width of vehicle 500. Distance 532 may be the lateral distance between the centerline and object 502. Distance 530 may be the maximum lateral distance at which a collision is likely if vehicle 500 continues traveling in the same direction and object 502 does not move. Responsive to determining that distance 532 is less than distance 530, the processing circuitry may determine that a collision is likely or imminent. The processing circuitry can generate an alert in response to determining that distance 532 is less than distance 530, and the processing circuitry can cause a wireless transmitter to transmit the alert to a receiver to alert a user such as a vehicle operator or a crewmember.

The processing circuitry may be configured to determine an estimated time to collision between vehicle 500 and object 502 based on the positions of vehicle 500 and object 502, the distance between vehicle 500 and object 502, the velocity of vehicle 500, and/or the velocity of object 502. Responsive to determining that the estimated time to collision is greater than a threshold duration, the processing circuitry may be configured to suppress the transmission of the alert. Responsive to determining that the estimated time to collision is less than a threshold duration, the processing circuitry may be configured to cause the wireless transmitter to transmit the alert. In some examples, vehicle 500 can receive surveillance signals from object 502, where the surveillance signals indicate the speed of object 502. The processing circuitry collocated with the camera, or other processing circuitry, can use the speed to determine the estimated time to collision or the likelihood of a collision.

Responsive to receiving the alert, processing circuitry in the vehicle control center may be configured to cause a user interface to flash an annunciation as vehicle 500. The user interface can also present a visual alert, an audible alert, and/or any other kind of alert. For example, the user interface can present a beeping or flashing alert, where the frequency of the beeping or flashing increases as the estimated time to collision decreases. The user interface can also increase the frequency of the alert as the distance between vehicle 500 and object 502 decreases.

In the example of FIG. 6, vehicle 600 includes a camera that can capture an image of object 602. The camera may be positioned in a wingtip of vehicle 600, such as a wingtip on a side of vehicle 600 that faces object 602. The processing circuitry that is collocated with the camera may be configured to determine the location of object 602 relative to the wingtip of vehicle 600. The wingtip camera of vehicle 600 may be useful when the field of view of the EVS sensor (e.g., the nose sensor) is not sufficient to determine the position of object 602. For example, when vehicle 600 is turning at point 650, and object 602 is stationary or moving at a relatively slow speed. Depending on the visibility and time of the day, the operator and/or crewmembers of vehicle 600 may not notice the presence of object 602. Thus, a sensor mounted on a protrusion of vehicle 600 can help the crew to avoid the collision.

In examples in which object 602 is an aircraft, the camera onboard vehicle 600 can capture an image of the tail, elevator, vertical stabilizer, wing, and/or any other miscellaneous features of object 602. The collocated processing circuitry can determine the relative location of any of the features of object 602. The collocated processing circuitry can also determine distance 632 based on the captured images, where distance 632 is the distance between the centerline of vehicle 600 and object 602.

The collocated processing circuitry may be configured to compare distance 632 to distance 630. Distance 630 may be threshold level that represents one half of distance 640, where distance 640 is the wingspan or width of vehicle 600. Responsive to determining that distance 632 is greater than distance 630, the processing circuitry may determine that a collision is not likely or imminent. The processing circuitry can also consider the velocity of vehicle 600, the future turn at point 650, and the velocity of object 602 (e.g., determined based on surveillance signals, such as ADS-B signals).

The processing circuitry can generate an alert based on distance 632 and in response to determining that vehicle 600 will turn at point 650 towards object 602. The processing circuitry can be based on the generation of the alert on distance 632 by determining whether distance 632 is less than a second threshold level, which may be based on the velocity of vehicle 600. The processing circuitry can cause a wireless transmitter to transmit the alert to a receiver to alert a user such as an operator or a crewmember of vehicle 600.

The processing circuitry may be configured to determine an estimated time to collision between vehicle 600 and object 602 based on distances 632 and 634. Responsive to determining that the estimated time to collision is greater than a threshold duration, the processing circuitry may be configured to suppress the transmission of the alert. Responsive to determining that the estimated time to collision is less than a threshold duration, the processing circuitry may be configured to cause the wireless transmitter to transmit the alert. The processing circuitry collocated with the camera, or other processing circuitry, can use the speed to determine the estimated time to collision or the likelihood of a collision.

Responsive to receiving the alert, the processing circuitry in the vehicle control center may be configured to cause a user interface to flash an annunciation as vehicle 600. The user interface can also present a visual alert, an audible alert, and/or any other kind of alert. For example, the user interface can present a beeping or flashing alert, where the frequency of the beeping or flashing increases as the estimated time to collision decreases. The user interface can also increase the frequency of the alert as the distance between vehicle 600 and object 602 decreases. Presenting the alert to the operator and/or crewmembers of vehicle 600 may help the operator take preventive action.

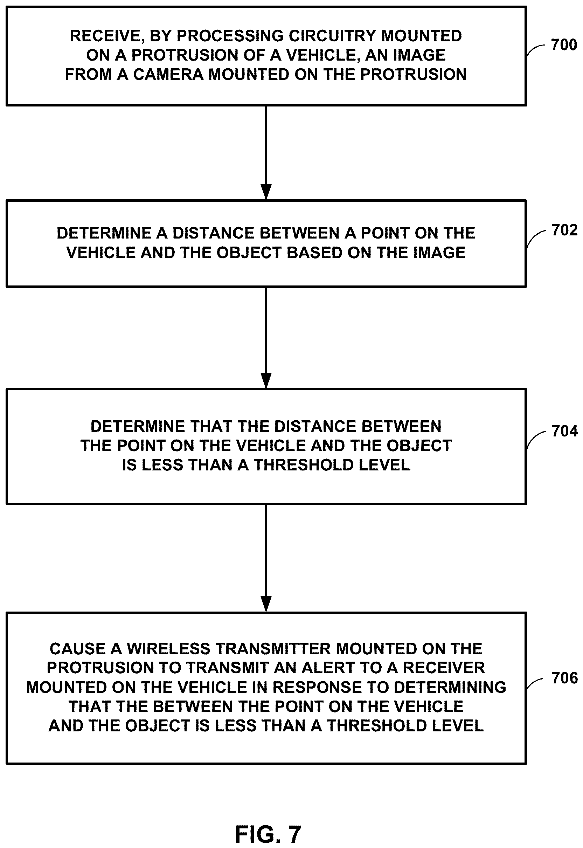

FIG. 7 is a flowchart illustrating an example process for detecting an object in the proximity of a vehicle, in accordance with some examples of this disclosure. The example process of FIG. 7 is described with reference to processing circuitry 130 shown in FIG. 1, although other components may exemplify similar techniques.

In the example of FIG. 7, processing circuitry 130 mounted on protrusion 110 of vehicle 100 receives an image captured by camera 140 mounted on protrusion 110 (700). Camera 140 may capture a visible-light image of object 190. Camera 140 may include a stationary camera or may be capable of rotating. In some examples, camera 140 can capture a video stream.

In the example of FIG. 7, processing circuitry 130 determines a distance between a point on vehicle 100 and object 190 based on the image (702). Processing circuitry 130 can use image processing techniques to determine the distance from camera 140 to object 190. In some examples, processing circuitry 130 can determine the distance from camera 140 to a specific feature of object 190, such as a corner, edge, tail, or nose of object 190. Processing circuitry 130 can use a known position of camera 140 relative to the point on vehicle 100 to determine the location of object 190 relative to the point on vehicle 100.

In the example of FIG. 7, processing circuitry 130 determines whether the distance between the point on vehicle 100 and object 190 is less than a threshold level (704). Processing circuitry 130 may be configured to whether the distance is less than or equal to the threshold level. Processing circuitry 130 can compare the distance to the threshold level to determine whether object 190 is within a width or wingspan of vehicle 100.

In the example of FIG. 7, processing circuitry 130 causes wireless transmitter 150 to transmit alert 170 to receiver 180 mounted on vehicle 100 in response to determining that the distance between the point on vehicle 100 and object 190 is less than the threshold level (706). Wireless transmitter 150 can transmit a signal encoding alert 170 and other information relating to object 190, such as an estimated time and a distance to collision between vehicle 100 and object 190. Receiver 180 may be located in the control center of vehicle 100. Processing circuitry in the control center can cause a user interface to present alert 170 to an operator and/or crewmember of vehicle 100.

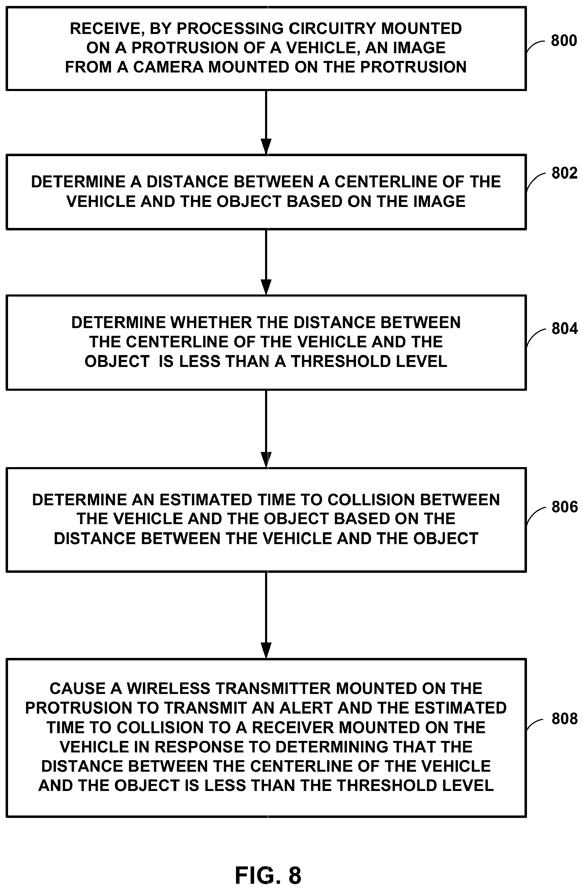

FIG. 8 is a flowchart illustrating an example process for determining an estimated time to collision between a vehicle and an object, in accordance with some examples of this disclosure. The example process of FIG. 8 is described with reference to processing circuitry 130 shown in FIG. 1, although other components may exemplify similar techniques.

In the example of FIG. 8, processing circuitry 130 mounted on protrusion 110 of vehicle 100 receives an image captured by camera 140 mounted on protrusion 110 (800). Processing circuitry 130 then determines a distance between a centerline of vehicle 100 and object 190 based on the image (802). Processing circuitry 130 can use image processing techniques to determine the distance from camera 140 to object 190. Processing circuitry 130 may also determine the angle, with respect to the centerline of vehicle 100, of a line from camera 140 to object 190. Processing circuitry 130 can use a known position of camera 140 relative to the point on vehicle 100 to determine the location of object 190 relative to the point on vehicle 100.

In the example of FIG. 8, processing circuitry 130 determines whether the distance between the centerline of vehicle 100 and object 190 is less than a threshold level (804). Processing circuitry 130 may be configured to whether the distance is less than or equal to the threshold level. Processing circuitry 130 can compare the distance to the threshold level to determine whether object 190 is within a width or wingspan of vehicle 100.

In the example of FIG. 8, processing circuitry 130 determines an estimated time to collision between vehicle 100 and object 190 based on the distance between vehicle 100 and object 190 (806). Processing circuitry 130 can determine the velocity of vehicle 100 based on accelerometer data or ADS-B data. Processing circuitry 130 may be configured to also determine the velocity of object 190. Based on the distance between vehicle 100 and object 190 and the velocities of vehicle 100 and object 190.

In the example of FIG. 8, processing circuitry 130 causes wireless transmitter 150 to transmit alert 170 and the estimated time to collision to receiver 180 mounted on vehicle 100 in response to determining that the distance between the centerline of vehicle 100 and object 190 is less than the threshold level (808). Wireless transmitter 150 can transmit a signal encoding alert 170 and the estimated time to collision between vehicle 100 and object 190.

The following numbered examples demonstrate one or more aspects of the disclosure.
Example 1. A collision awareness system for a vehicle includes a camera configured to mount on a protrusion of the vehicle and capture an image and a wireless transmitter configured to mount on the protrusion of the vehicle. The collision awareness system includes processing circuitry configured to mount on the protrusion of the vehicle, receive the image from the camera, and determine a distance between a point on the vehicle and an object based on the image. The processing circuitry is also configured to determine whether the distance between the point on the vehicle and the object is less than a threshold level. The processing circuitry is further configured to cause the wireless transmitter to transmit an alert to a receiver mounted on the vehicle in response to determining that the distance between the point on the vehicle and the object is less than the threshold level.
Example 2. The collision awareness system of example 1, the processing circuitry is further configured to suppress transmission of the alert in response to determining that the distance between the point on the vehicle and the object is not less than the threshold level.
Example 3. The collision awareness system of examples 1-2 or any combination thereof, the processing circuitry is configured to cause the wireless transmitter to transmit the distance between the point on the vehicle and the object.
Example 4. The collision awareness system of examples 1-3 or any combination thereof, the processing circuitry is configured to determine a distance between the point on the vehicle and the object at least in part by determining a distance between a centerline of the vehicle and the object based on the image.
Example 5. The collision awareness system of examples 1-4 or any combination thereof, the processing circuitry is configured to cause the wireless transmitter to transmit the distance between the centerline of the vehicle and the object.
Example 6. The collision awareness system of examples 1-5 or any combination thereof, the threshold level is greater than or equal to half of a wingspan of the vehicle.
Example 7. The collision awareness system of examples 1-6 or any combination thereof, the processing circuitry is further configured to determine an expected time to a collision between the vehicle and the object.
Example 8. The collision awareness system of example 7, the processing circuitry is configured to cause the wireless transmitter to transmit the expected time to the collision between the vehicle and the object.
Example 9. The collision awareness system of examples 7-8 or any combination thereof, the processing circuitry is configured to determine the expected time to the collision based on a velocity of the vehicle and a position of the object.
Example 10. The collision awareness system of examples 7-9 or any combination thereof, the processing circuitry is configured to determine the expected time to the collision based on a velocity of the vehicle and a velocity of the object.
Example 11. The collision awareness system of examples 1-10 or any combination thereof, further including a circuit board positioned on the protrusion of the vehicle, where the wireless transmitter is coupled to the circuit board, and the processing circuitry is coupled to the circuit board.
Example 12. The collision awareness system of example 11, the camera is coupled to the circuit board.
Example 13. The collision awareness system of examples 11-12 or any combination thereof, the camera is electrically coupled to the circuit board.
Example 14. The collision awareness system of examples 11-13 or any combination thereof, the wireless transmitter is mounted on the circuit board.
Example 15. The collision awareness system of examples 1-14 or any combination thereof, the processing circuitry is mounted on the circuit board.
Example 16. The collision awareness system of examples 1-15 or any combination thereof, the vehicle includes an aircraft, the protrusion includes a wingtip of the aircraft, and the camera, the wireless transmitter, and the processing circuitry are configured to mount on the wingtip of the aircraft.
Example 17. The collision awareness system of examples 1-16 or any combination thereof, the vehicle includes an aircraft, the protrusion includes a nose of the aircraft, and the camera, the wireless transmitter, and the processing circuitry are configured to mount on the nose of the aircraft.
Example 18. The collision awareness system of examples 1-17 or any combination thereof, the vehicle includes an aircraft, the protrusion includes a tail of the aircraft, and the camera, the wireless transmitter, and the processing circuitry are configured to mount on the tail of the aircraft.
Example 19. The collision awareness system of examples 1-18 or any combination thereof, the vehicle includes an aircraft, the protrusion includes a fin of the aircraft, and the camera, the wireless transmitter, and the processing circuitry are configured to mount on the fin of the aircraft.
Example 20. The collision awareness system of examples 1-19 or any combination thereof, the vehicle includes an automobile, the protrusion includes a corner of the aircraft, and the camera, the wireless transmitter, and the processing circuitry are configured to mount on the corner of the automobile.
Example 21. The collision awareness system of examples 1-20 or any combination thereof, the camera is a first camera, the wireless transmitter is a first wireless transmitter, the processing circuitry is first processing circuitry, the protrusion is a first protrusion, the camera is a first camera, the image is a first image, the point is a first point, wherein the distance is a first distance, the object is a first object, the threshold level is a first threshold level, and the alert is a first alert. The collision awareness system further includes a second camera configured to mount on a second protrusion of the vehicle and capture a second image. The collision awareness system also includes a second wireless transmitter configured to mount on the second protrusion of the vehicle. The collision awareness system includes second processing circuitry configured to mount on the second protrusion of the vehicle, receive the second image from the second camera, and determine a second distance between a second point on the vehicle and the second object based on the second image. The second processing circuitry is also configured to determine whether the second distance between the second point on the vehicle and the second object is less than a second threshold level. The second processing circuitry is further configured to cause the second wireless transmitter to transmit a second alert to the receiver in response to determining that the second distance between the second point on the vehicle and the second object is less than the second threshold level.
Example 22. The collision awareness system of examples 1-21 or any combination thereof, the vehicle includes an aircraft, the first protrusion includes a first wingtip of the aircraft, and the second protrusion includes a second wingtip of the aircraft.
Example 23. The collision awareness system of examples 1-22 or any combination thereof, the vehicle includes an aircraft including a plurality of cameras, each camera of the plurality of cameras mounted on a respective protrusion, and a plurality of wireless transmitters, each wireless transmitter of the plurality of wireless transmitters mounted on a respective protrusion. The aircraft also includes a plurality of processors, each processor of the plurality of processors mounted on a respective protrusion, wherein each processor is configured to receive an image from a respective camera and determine a respective distance between a respective point on the vehicle and the respective object based on the respective image. Each processor is also configured to determine whether the respective distance between the respective point on the vehicle and the respective object is less than a respective threshold level. Each processor is further configured to cause the wireless transmitter to transmit a respective alert to the receiver mounted in response to determining that the respective distance between the respective point on the vehicle and the respective object is less than the respective threshold level.
Example 24. The collision awareness system of examples 1-23 or any combination thereof, the processing circuitry is configured to determine the distance between the point on the vehicle and the object based on a single-camera detection technique.
Example 25. A collision awareness method for a vehicle includes receiving, by processing circuitry mounted on a protrusion of the vehicle, an image from a camera mounted on the protrusion. The collision awareness method also includes determining, by processing circuitry, a distance between a point on the vehicle and the object based on the image. The collision awareness method further includes determining, by processing circuitry, that the distance between the point on the vehicle and the object is less than a threshold level. The collision awareness method includes causing, by processing circuitry, a wireless transmitter mounted on the protrusion to transmit an alert to a receiver mounted on the vehicle in response to determining that the distance between the point on the vehicle and the object is less than the threshold level.
Example 26. The collision awareness method of example 25, further including suppressing transmission of the alert in response to determining that the distance between the point on the vehicle and the object is not less than the threshold level.
Example 27. The collision awareness system of examples 25-26 or any combination thereof, further including causing the wireless transmitter to transmit the distance between the point on the vehicle and the object.
Example 28. The collision awareness system of examples 25-27 or any combination thereof, determining a distance between the point on the vehicle and the object includes determining a distance between a centerline of the vehicle and the object based on the image.
Example 29. The collision awareness system of examples 25-28 or any combination thereof, further including causing the wireless transmitter to transmit the distance between the centerline of the vehicle and the object.
Example 30. The collision awareness system of examples 25-29 or any combination thereof, the threshold level is greater than or equal to half of a wingspan of the vehicle.
Example 31. The collision awareness system of examples 25-30 or any combination thereof, further including determining an expected time to a collision between the vehicle and the object.
Example 32. The collision awareness system of examples 25-31 or any combination thereof, further including causing the wireless transmitter to transmit the expected time to the collision between the vehicle and the object.
Example 33. The collision awareness system of examples 25-32 or any combination thereof, further including determining the expected time to the collision based on a velocity of the vehicle and a position of the object.
Example 34. The collision awareness system of examples 25-33 or any combination thereof, further including determining the expected time to the collision based on a velocity of the vehicle and a velocity of the object.
Example 35. The collision awareness system of examples 25-34 or any combination thereof, where a circuit board is positioned on the protrusion of the vehicle. The camera is coupled to the circuit board, the wireless transmitter is coupled to the circuit board, and the processing circuitry is coupled to the circuit board.
Example 36. The collision awareness system of examples 25-35 or any combination thereof, the protrusion includes a wingtip of the aircraft.
Example 37. The collision awareness system of examples 25-36 or any combination thereof, the protrusion includes a nose of the aircraft.
Example 38. The collision awareness system of examples 25-37 or any combination thereof, the protrusion includes a tail of the aircraft.
Example 39. The collision awareness system of examples 25-38 or any combination thereof, the protrusion includes a fin of the aircraft.
Example 40. The collision awareness system of examples 25-39 or any combination thereof, the protrusion includes a corner of the automobile.
Example 41. A device includes a computer-readable medium having executable instructions stored thereon, configured to be executable by processing circuitry for causing the processing circuitry to receive an image from a camera mounted on a protrusion of a vehicle. The instructions are further configured to be executable by the processing circuitry for causing the processing circuitry to determine a distance between a point on the vehicle and the object based on the image and determine that the distance between the point on the vehicle and the object is less than a threshold level. The instructions are also configured to be executable by the processing circuitry for causing the processing circuitry to cause a wireless transmitter mounted on the protrusion to transmit an alert to a receiver mounted on the vehicle in response to determining that the distance between the point on the vehicle and the object is less than the threshold level, wherein the device is configured to mount on the protrusion of the vehicle.
Example 42. The device of example 41, further including instructions to cause the processing circuitry to perform the method of examples 25-39, or any combination thereof.

The disclosure contemplates computer-readable storage media comprising instructions to cause a processor to perform any of the functions and techniques described herein. The computer-readable storage media may take the example form of any volatile, non-volatile, magnetic, optical, or electrical media, such as a RAM, ROM, NVRAM, EEPROM, or flash memory. The computer-readable storage media may be referred to as non-transitory. A computing device may also contain a more portable removable memory type to enable easy data transfer or offline data analysis.

The techniques described in this disclosure, including those attributed to sensors 120, 122, 220, 320, 322, 420, 422, 424, and 426, processing circuitry 130, 230, and 330, cameras 140 and 240, wireless transmitters 150 and 250, receivers 180 and 350, memories 260 and 360, and/or user interface 340, and various constituent components, may be implemented, at least in part, in hardware, software, firmware or any combination thereof. For example, various aspects of the techniques may be implemented within one or more processors, including one or more microprocessors, DSPs, ASICs, FPGAs, or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry.

As used herein, the term "circuitry" refers to an ASIC, an electronic circuit, a processor (shared, dedicated, or group) and memory that execute one or more software or firmware programs, a combinational logic circuit, or other suitable components that provide the described functionality. The term "processing circuitry" refers one or more processors distributed across one or more devices. For example, "processing circuitry" can include a single processor or multiple processors on a device. "Processing circuitry" can also include processors on multiple devices, wherein the operations described herein may be distributed across the processors and devices.

Such hardware, software, firmware may be implemented within the same device or within separate devices to support the various operations and functions described in this disclosure. For example, any of the techniques or processes described herein may be performed within one device or at least partially distributed amongst two or more devices, such as between sensors 120, 122, 220, 320, 322, 420, 422, 424, and 426, processing circuitry 130, 230, and 330, cameras 140 and 240, wireless transmitters 150 and 250, receivers 180 and 350, memories 260 and 360, and/or user interface 340. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in an article of manufacture including a non-transitory computer-readable storage medium encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors. Example non-transitory computer-readable storage media may include RAM, ROM, programmable ROM (PROM), EPROM, EEPROM, flash memory, a hard disk, a compact disc ROM (CD-ROM), a floppy disk, a cassette, magnetic media, optical media, or any other computer readable storage devices or tangible computer readable media.

In some examples, a computer-readable storage medium comprises non-transitory medium. The term "non-transitory" may indicate that the storage medium is not embodied in a carrier wave or a propagated signal. In certain examples, a non-transitory storage medium may store data that can, over time, change (e.g., in RAM or cache). Elements of devices and circuitry described herein, including, but not limited to, sensors 120, 122, 220, 320, 322, 420, 422, 424, and 426, processing circuitry 130, 230, and 330, cameras 140 and 240, wireless transmitters 150 and 250, receivers 180 and 350, memories 260 and 360, and/or user interface 340, may be programmed with various forms of software. The one or more processors may be implemented at least in part as, or include, one or more executable applications, application modules, libraries, classes, methods, objects, routines, subroutines, firmware, and/or embedded code, for example.

Various examples of the disclosure have been described. Any combination of the described systems, operations, or functions is contemplated. These and other examples are within the scope of the following claims.

## Claims

1. A collision awareness system for a vehicle, the collision awareness system comprising:
a camera configured to mount on a protrusion of the vehicle and capture an image;
a wireless transmitter configured to mount on the protrusion of the vehicle; and
processing circuitry configured to:
mount on the protrusion of the vehicle;
receive the image from the camera;
determine a distance between a point on the vehicle and an object based on the image;
determine whether the distance between the point on the vehicle and the object is less than a threshold level; and
cause the wireless transmitter to transmit an alert to a receiver mounted on the vehicle in response to determining that the distance between the point on the vehicle and the object is less than the threshold level.

2. The collision awareness system of claim 1, wherein the processing circuitry is further configured to suppress transmission of the alert in response to determining that the distance between the point on the vehicle and the object is not less than the threshold level.

3. The collision awareness system of claim 1, wherein the processing circuitry is configured to cause the wireless transmitter to transmit the distance between the point on the vehicle and the object.

4. The collision awareness system of claim 1, wherein the processing circuitry is configured to determine a distance between the point on the vehicle and the object at least in part by determining a distance between a centerline of the vehicle and the object based on the image.

5. The collision awareness system of claim 4, wherein the processing circuitry is configured to cause the wireless transmitter to transmit the distance between the centerline of the vehicle and the object.

6. The collision awareness system of claim 1, wherein the processing circuitry is further configured to determine an estimated time to a collision between the vehicle and the object.

7. The collision awareness system of claim 6, wherein the processing circuitry is configured to cause the wireless transmitter to transmit the estimated time to the collision between the vehicle and the object.

8. The collision awareness system of claim 6, wherein the processing circuitry is configured to determine the estimated time to the collision based on a velocity of the vehicle and a position of the object.

9. The collision awareness system of claim 1, further comprising a circuit board positioned on the protrusion of the vehicle,
wherein the camera is electrically coupled to the circuit board,
wherein the wireless transmitter is mounted on the circuit board, and
wherein the processing circuitry is mounted on the circuit board.

10. The collision awareness system of claim 1, wherein the camera is a first camera, wherein the wireless transmitter is a first wireless transmitter, wherein the processing circuitry is first processing circuitry, wherein the protrusion is a first protrusion, wherein the image is a first image, wherein the point is a first point, wherein the distance is a first distance, wherein the object is a first object, wherein the threshold level is a first threshold level, and wherein the alert is a first alert, the collision awareness system further comprising:
a second camera configured to mount on a second protrusion of the vehicle and capture a second image;
a second wireless transmitter configured to mount on the second protrusion of the vehicle; and
second processing circuitry configured to:
mount on the second protrusion of the vehicle;
receive the second image from the second camera;
determine a second distance between a second point on the vehicle and a second object based on the second image;
determine whether the second distance between the second point on the vehicle and the second object is less than a second threshold level; and
cause the second wireless transmitter to transmit a second alert to the receiver in response to determining that the second distance between the second point on the vehicle and the second object is less than the second threshold level.

11. The collision awareness system of claim 1, wherein the vehicle comprises an aircraft comprising:
a plurality of cameras, each camera of the plurality of cameras mounted on a respective protrusion;
a plurality of wireless transmitters, each wireless transmitter of the plurality of wireless transmitters mounted on a respective protrusion;
a plurality of processors, each processor of the plurality of processors mounted on a respective protrusion, wherein each processor is configured to:
receive an image from a respective camera;
determine a respective distance between a respective point on the vehicle and an object based on the respective image;
determine whether the respective distance between the respective point on the vehicle and the object is less than a respective threshold level; and
cause a respective wireless transmitter to transmit a respective alert to the receiver in response to determining that the respective distance between the respective point on the vehicle and the respective object is less than the respective threshold level.

12. The collision avoidance system of claim 1, wherein the processing circuitry is configured to determine the distance between the point on the vehicle and the object based on a single-camera detection technique.

13. A collision awareness method for a vehicle, the method comprising:
receiving, by processing circuitry mounted on a protrusion of the vehicle, an image from a camera mounted on the protrusion;
determining, by processing circuitry, a distance between a point on the vehicle and the object based on the image;
determining, by processing circuitry, that the distance between the point on the vehicle and the object is less than a threshold level; and
causing, by processing circuitry, a wireless transmitter mounted on the protrusion to transmit an alert to a receiver mounted on the vehicle in response to determining that the distance between the point on the vehicle and the object is less than the threshold level.

14. The collision awareness method of claim 13, further comprising suppressing transmission of the alert in response to determining that the distance between the point on the vehicle and the object is not less than the threshold level.

15. The collision awareness method of claim 13, further comprising:
determining an estimated time to a collision between the vehicle and the object; and
causing the wireless transmitter to transmit the estimated time to the collision between the vehicle and the object.
